# EUROPEAN PATENT APPLICATION

(11) **EP 1 079 547 A1**
(43) Date of publication of application: **28.02.2001**
(21) Application number: 99306763.6
(22) Date of filing: 25.08.1999
(51) Int. Cl.: H04B 7/185

(54) **Cellular radio system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A cell of a mobile cellular radio system is provided on board a ship (1) by providing a tracking satellite connection 3 - 6 - 13 between the antenna or antennas (11) on the ship and a host cellular network (4). Incoming calls are routed by way of the host cellular network (4).

The switching provision may be shared between a shore station (41) and an onboard switching facility (16) to allow users on board the same ship (1) to communicate with each other without using the satellite connection 3 - 6 - 13.

Provision is made to switch off the onboard system, if interference is detected between the onboard antennas (11) and the fixed cells of a conventional cellular network, for example when the ship (1) is approaching a port.

## Description

This invention relates to cellular radio systems, and in particular to a system for allowing the use of a mobile cellular telephone to be used on board a vehicle when it is out of range of the fixed base stations of a cellular telephone system. Such a situation is most likely to arise on board a ship, but land-based vehicles may also pass through remote areas out of range of fixed base stations. The invention may also see use in providing temporary telecommunications coverage in areas where the fixed network, or the fixed part of the cellular network, has been damaged by natural disasters or other circumstances.

The system architecture of the GSM (Global System for Mobile radio) standard will first be discussed. Other standards operate in a similar manner.

In a cellular radio system one or more mobile radio telephones may establish a radio connection with one of a number of fixed radio transceivers, connected to a telephone switching system, and thus to set up and make telephone calls. Arrangements are made such that if the mobile telephone moves out of range of the fixed radio transceiver, connection with the switching system can be maintained or resumed by a "handover" process, by which the mobile telephone establishes radio contact with another fixed radio transceiver. In the "GSM" standard the fixed radio transceivers are known as "Base Transceiver Sites (BTS), and one or more BTS are controlled by a "Base Site Controller" (BSC) which controls handover, frequency and timeslot allocation and other functions. Calls to and from a mobile radio telephone are routed by way of the BTS and BSC through a "Mobile Switching Centre" (MSC), connected to other networks. The MSC has an associated information store known as a "Visitor Location Register" (VLR) which stores information relating to the mobile radio telephones currently working to base transceiver sites controlled by the MSC, allowing incoming calls to be routed by way of the BSC and BTS to the mobile radio telephone, monitoring handovers, and ensuring that outgoing calls comply with any restrictions that may have been placed on the user's account. The user's account information is stored in a permanent register known as the Home Location Register (HLR), from where this information is retrieved by the VLR when the radio telephone moves from the control of one MSC to another (when the MSCs belong to different operators, such a move is known as "roaming"). The HLR also records the identity of the MSC to which the mobile radio telephone is currently operating, so that incoming calls can be routed to that MSC by reference to the information currently stored in the HLR.

It is known to provide cellular radio coverage on board a vehicle such as a railway train, using a passive fibre optic network or similar, in which connections from several mobile telephones on board the vehicle are fed to a single repeater antenna on the vehicle which communicates with the nearest fixed base station to the vehicle. Handover from one fixed base station to another is handled for all mobile units together by a vehicle-borne repeater unit. This system reduces signalling overload when several mobile units on the vehicle enter a new cell at the same time. However, as the repeater co-operates with the fixed base transceivers of the cellular system, it cannot be used outside the range of such transceivers.

For truly global coverage, satellite telephones are available. However, these are expensive and much heavier than a cellular telephone. A user without his own satellite telephone must use special facilities provided by the vehicle's operators, for which payment is likely to be at point of use (or prepaid), and may be in a foreign currency. Incoming calls made to the user's cellular telephone will not be successful unless the calls are diverted to the satellite telephone number. A user with his own cellular telephone account, which through "roaming" agreements between network operators can be used in many different countries, would prefer to continue to use his cellular telephone when travelling between these countries on board a ship or other vehicle.

According to a first aspect of the invention, there is provided apparatus for providing telephone connection between one or more cellular radio telephones and a cellular radio switching system, comprising a moveable base transceiver station for providing a radio connection with the cellular radio telephones, a fixed network connected to the cellular radio switching system, and a tracking radio link for providing radio connection between the moveable base transceiver station and the fixed network.

Effectively, the moveable base station provides a cell which moves with the ship or other vehicle on which it is located, but whose operation appears to the user as an ordinary fixed base station of the network to which it is connected.

A second aspect of the invention, forming the fixed (shore-based) part of the system, comprises a cellular radio system having a switching system for providing telephone connections for one or more cellular radio telephones, and a tracking radio link for connecting a moveable base transceiver station to the cellular radio switching system.

A third aspect of the invention, forming the moveable (on board) part of the system, provides apparatus for providing telephone connection between one or more cellular radio telephones and a cellular radio switching system, the apparatus comprising a moveable base transceiver station for providing a radio connection with the cellular radio telephones, and a tracking radio link for providing radio connection between the base transceiver station and the cellular radio switching system.

According to a fourth aspect, there is provided a method for providing telephone connection between one or more cellular radio telephones and a cellular radio switching system, by providing a tracking radio link between a moveable base transceiver station for providing a radio connection with the cellular radio telephones, and a fixed network connected to the switching system.

Preferably the tracking radio link is a satellite link, that is a radio connection between the moving vehicle and a fixed earth station, which connection is routed by way of a relay station in orbit around the earth. The "footprint" of an individual geostationary satellite such as those in the "Inmarsat" system is very large, so a ship would be able to remain in contact with the earth station through one satellite for the entire duration of a typical voyage. Their "footprints" overlap to a sufficient extent that, should a transfer from one satellite to another nevertheless become necessary, it can be arranged to take place when the system is already shut down. Such shut downs may be required when the ship is in port (for reasons to be discussed later), or may be arranged for a quiet time such as early in the morning (ship's time). However, if continuous coverage is required, means may be provided for maintaining a call in progress when such a change is made.

In one of the described embodiments, which all follow the system architecture of the "GSM" standard, the base site control system (BSC) controlling the moveable BTS is part of the fixed (shore-based) system. In the other two embodiments, the BSC is part of the onboard system. In the first arrangement the tracking radio link connects the fixed BSC to the onboard BTS; in the second it connects the onboard BSC to the MSC. In the third embodiment, an onboard MSC is provided, connected to a shore based MSC. The first embodiment, with a shore-based BSC system, is the simplest, and allows control of several onboard base sites (BTS) from one BSC. However, the two arrangements with onboard BSCs are more versatile, and require a lower signalling overhead over the tracking satellite link. The arrangement with an onboard MSC is the most complex, but also the most versatile, as it allows integration with other onboard communications systems such as an on-board private exchange. Among other advantages, this arrangement allows emergency calls to be intercepted and handled on board, whereas if the MSC is shore-based, emergency calls from mobile units on board ship would have to be barred, to prevent them being routed to the emergency services local to the BSC.

If the ship or other vehicle comes within range of the radio base stations of a conventional cellular radio network, there is a risk of interference between the onboard radio base station and those on shore. Moreover, the ship's operators would not normally have a licence to operate a cellular radio system within the territory being visited, in competition with the resident network. It is therefore desirable that the onboard system be disconnected in such circumstances, either manually or when such interference is detected. This may be done by closing down the satellite link, or by disabling part of the onboard system. Users of cellular telephones on board the vehicle would still be able to use their telephones of course, by "roaming" to the resident network.

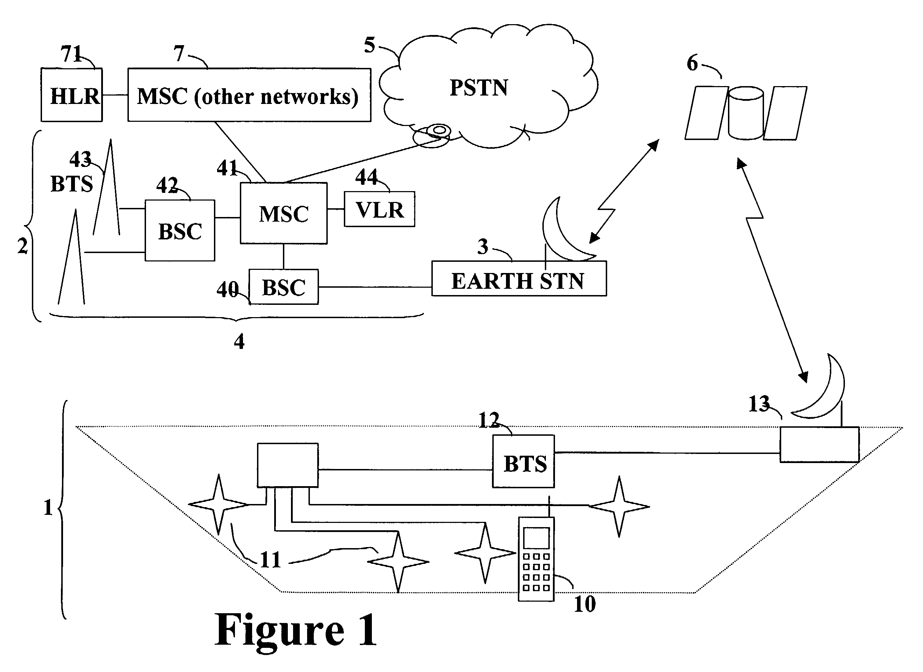

Three embodiments of the invention will now be described, by way of example, with reference to Figures 1, 2 and 3 of the drawings respectively. These embodiments are all based on the system architecture of the GSM (Global System for Mobile radio) standard, and are intended for use on board a ship. These embodiments differ in the location of the various components of the GSM system architecture, and the position of the satellite link in that architecture.

In all the embodiments, the system can be categorised into two main components: namely the shipboard part 1 and the fixed part 2, communicating with each other through a satellite connection 6. The fixed part 2 is itself in two parts, namely a satellite earth station 3 and a public land mobile network (PLMN) 4, which is in turn interconnected with other mobile networks 7 and fixed networks 5 to allow calls to be made between users of different networks.

The system provides a cellular radio subscriber with the ability to use his own handset 10 aboard a ship, located anywhere within an agreed satellite coverage area. The coverage aboard ship can be provided by any suitable means, using known radio repeater distribution systems 11 to provide radio coverage wherever required. The arrangement of Figure 1 will be described first.

The distribution system 11 is fed by a base transceiver site 12, for onward transmission to the satellite earth station 3 via a satellite tracking system 13. The satellite tracking system may be a conventional satellite telephone system as commonly used for ship-to-shore communications, providing a satellite link 6 from the ship's satellite tracking system 13 to the satellite earth station 3. In the embodiment of Figure 1, the satellite earth station 3 is in turn connected to a Base Site Controller (BSC) 40 associated with the mobile switching centre (MSC) 41 of a conventional cellular telephone system. The satellite connection provides several voice channels and a signalling channel (supervisory control - management channel), and can be made by any connection of appropriate capacity.

Both the base transceiver site 12 and the shore-based base site controller 40 have an extra software upload facility to allow for the delays incurred over the satellite link 3 - 6 - 13, but are otherwise conventional. The base site controller 40 operates in conventional manner, being connected to the mobile switching centre 41 of the host network 4. The host network 4 may also support one or more further base site controllers 42 controlling conventional base transceiver sites 43. The Mobile Switching Centre 41 also has an associated "Visitor Location Register" 44 which, in conventional manner, records details of the cellular telephones currently co-operating with the Mobile Switching Centre 41, so that details can be exchanged with the Home Location Register 71 of the user's home network for billing purposes, and to allow incoming calls to the handset 10 to be routed correctly. These details include the identity of the BSC 40, 42 to which the user is connected, allowing different call charges to be applied for use in different cells, and in particular for calls made through the onboard base trasnceiver site 12.

In the cellular mobile network 4, standard GSM functionality is used. Users aboard the ship will be able to use this service provided they are subscribers to the host network 4. They can also use the service if they subscribe to a network 7 which has a "roaming" agreement with the host network 4, if the subscriber has global roaming authorised by his service provider. "Roaming" is the arrangement which allows a subscriber to one network to use his cellular telephone when connected to another network.

In use, both parties to a call, and the cellular network, operate normally. The cellular telephone 10 co-operates with the base station 12 on the ship as it would with any other base station 43. The home location register 71 identifies the cellular telephone 10 as currently served by the MSC 41, and routes incoming calls accordingly.

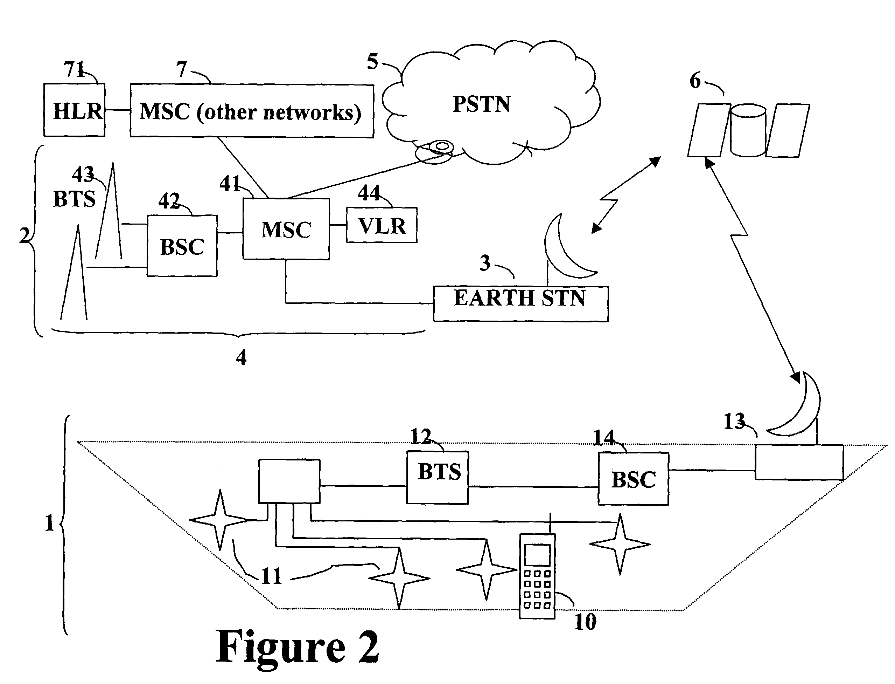

In the variant of this embodiment shown in Figure 2, the Base Site Controller 14 is on the ship, and the satellite link 3 - 6 - 13 is between the MSC 41 and the BSC 14. This reduces the signalling overhead over the satellite link 3 - 6 - 13 as there is much less traffic between an MSC and a BSC than there is between a BSC and a BTS, so the cost of the satellite link can be reduced - perhaps to the extent that an on-demand satellite link may be preferable to a permanently leased one. Despite its onboard physical location, the BSC 14 is still perceived by the network 4 as part of the region served by the MSC 41.

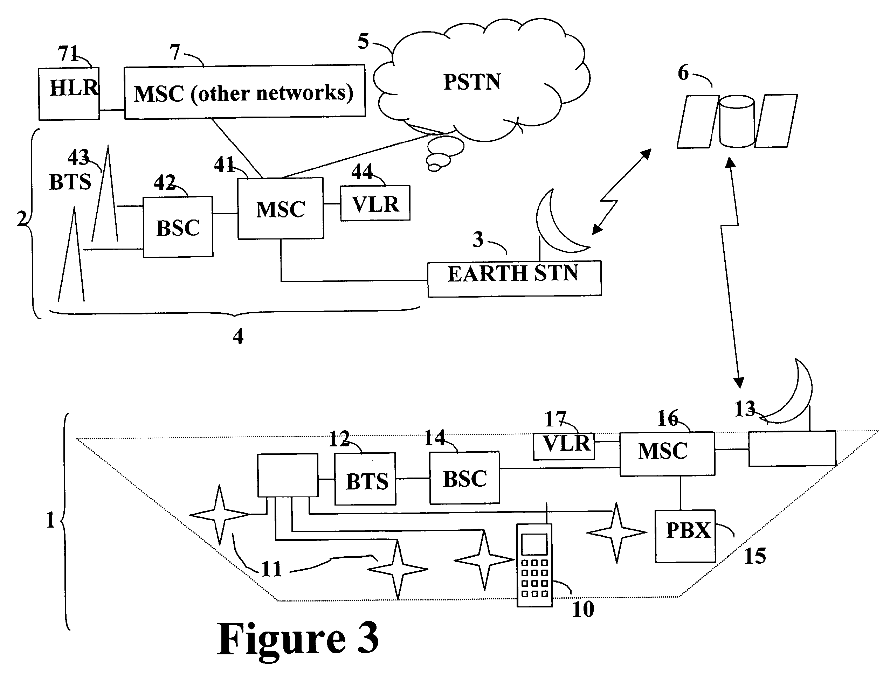

In the third embodiment, shown in Figure 3, a subsidiary mobile switching centre 16 is provided on board the ship, with its own visitor location register 17. The satellite link 3 - 6 - 13 is now between the shore based MSC 41 and the onboard MSC 16. The user record in the HLR 71 will identify the mobile unit 10 as currently served by the onboard MSC 16, and route incoming calls (by way of the shore based MSC 41) accordingly. Alternatively, the HLR may merely identify the mbile unit 10 as served by the network 4, and route the call to the MSC 41, which will in turn recognise from its entry in the shore based VLR 44 that this mobile unit is currently being served by the subsidiary MSC 16.

This embodiment allows integration of the onboard MSC 16 with the ship's internal telephone exchange (PBX) 15. In particular it provides a simple means of providing passengers and crew with a "Wireless PBX" facility, as users on board the ship can communicate with each other through the BSC 14 without using the satellite link 3 - 6 - 13. When a call made by a cellular telephone 10, the serving MSC 16 first consults its VLR 17 to establish whether the called party is currently served by the same MSC 16. If this is the case, it connects the call without the use of any inter-MSC links. Thus, in this third embodiment, calls made between two users both on board the ship 1 may be made without the use of the satellite link 3 - 6 - 13.

If the ship 1 moves into radio range of land-based base transceiver sites 43, signals from the land-based sites may interfere with the onboard BTS 12, and vice versa. It is known for conventional land-based systems to select alternative frequencies or reduce signal strength if such interference is detected. In the present embodiments, the shipboard system is arranged to shut down, for example by discontinuing the satellite link 3 - 6 - 13, by switching off the distribution network 11, or by other means, when such interference is detected. Users of mobile telephones 10 on board the ship may then connect to the shore-based BTS 43. If the local network is not the network 4 to which the onboard BTS 12 is connected, users will "roam" from the host network 4 to the local network in conventional manner when such transfer takes place.

## Claims

1. Apparatus for providing telephone connection between one or more cellular radio telephones and a cellular radio switching system, comprising a moveable base transceiver station for providing a radio connection with the cellular radio telephones, a fixed network connected to the cellular radio switching system, and a tracking radio link for providing radio connection between the moveable base transceiver station and the fixed network.

2. A cellular radio system having a switching system for providing telephone connections for one or more cellular radio telephones, and a tracking radio link for connecting a moveable base transceiver station to the cellular radio switching system.

3. Apparatus for providing telephone connection between one or more cellular radio telephones and a cellular radio switching system, the apparatus comprising a moveable base transceiver station for providing a radio connection with the cellular radio telephones, and a tracking radio link for providing radio connection between the base transceiver station and the cellular radio switching system.

4. Apparatus according to claim 1, 2 or 3, wherein the tracking radio link is a satellite link.

5. Apparatus according to claim 4, wherein the tracking satellite link has means for changing the satellite through which it is routed, and comprising means for maintaining a call in progress when such a change is made

6. Apparatus according to claim 1, 2, 4 or 5, wherein the operation of the moveable base transceiver station is controlled by a fixed base site control system connected to the base transceiver station by the tracking radio link.

7. Apparatus according to claim 1, 3, 4 or 5, wherein the operation of the base transceiver station is controlled by a moveable base site control system co-located with the base transceiver station and connected to the switching system by the tracking radio link.

8. Apparatus according to claim 1, 3, 4 or 5, wherein the moveable base site control system is connected to a localised telephone switching system on board a vehicle, the telephone switching system being connected to a fixed telephone switching system by the tracking radio link.

9. Apparatus according to any preceding claim, having means for detecting whether the moveable base transceiver station is in range of a fixed base transceiver station, and means for disconnecting the moveable base transceiver station from the network when such a fixed base transceiver station is detected.

10. A method for providing telephone connection between one or more cellular radio telephones and a cellular radio switching system, by providing a tracking radio link between a moveable base transceiver station providing a radio connection with the cellular radio telephones, and a fixed network connected to the switching system.

11. Method according to claim 10, wherein the tracking radio link is a satellite link.

12. Method according to claim 11, wherein a call in progress can be maintained when the satellite through which the tracking link is routed is changed.

13. Method according to claim 10, 11 or 12, wherein the operation of the moveable base transceiver station is controlled by a base site control system connected to the moveable base transceiver station by the tracking radio link.

14. Method according to claim 10, 11, 12, or 13, wherein the operation of the moveable base transceiver station is controlled by a base site control system co-located with the moveable base transceiver station and connected to the switching system by the tracking radio link.

15. Method according to claim 14, wherein the moveable base site control system is connected to a localised telephone switching system on board a vehicle, the telephone switching system being connected to a fixed telephone switching system by the tracking radio link.

16. Method according to any of claims 10 to 15, wherein if the moveable base transceiver station is in range of a fixed base transceiver station, the moveable base transceiver station is disconnected from the cellular network.
